# EUROPÄISCHE PATENTANMELDUNG

(11) **EP 0 806 558 A2**
(43) Veröffentlichungstag der Anmeldung: **12.11.1997**
(21) Anmeldenummer: 97810225.9
(22) Anmeldetag: 15.04.1997
(51) Int. Cl.: F02C 7/22, F02C 7/232, F23R 3/36

(54) **Vorrichtung zum Betreiben einer mit kombinierten Brennern für flüssige und gasförmige Brennstoffe bestückten Ringbrennkammer**

(30) Priorität: 10.05.1996 DE 19618856
(71) Anmelder: Asea Brown Boveri AG, 5401 Baden (CH)
(72) Erfinder: Anderson, Gordon, 5400 Baden (DE); Galke, Volkmar, 8006 Zürich (DE); Suter, Roger, 8001 Zürich (DE)
(74) Vertreter: Pöpper, Evamaria, Dr.

(57) **Zusammenfassung**

Die Erfindung betrifft eine Vorrichtung zum Betreiben einer mit kombinierten Brennern (1) für flüssige (4) und gasförmige Brennstoffe (9), insbesondere Brenner der Doppelkegelbauart, bestückten Ringbrennkammer (15), wobei jeder Brenner (1) zur Zufuhr des flüssigen Brennstoffes (4) eine Brennstofflanze (3) mit mindestens einem zusätzlichen Luftkanal (7) und zum Zerstäuben des flüssigen Brennstoffes (4) eine Airblast-Düse (2) aufweist, in welche Zerstäubungsluft (5) von ausserhalb der Brennerhaube (13) zugeführt wird, und ein Verstellmechanismus zur zumindestens teilweisen Abdrosselung des Zustromes der Zerstäubungsluft (5) bei Gasbetrieb vorgesehen ist. Sie ist dadurch gekennzeichnet, dass der Verstellmechanismus ein externes Ventil (21) ist, welches in einer vom Verdichteraustritt (18) kommenden Hauptzufuhrleitung (19) für die Zerstäubungsluft (5) angeordnet ist, wobei die Hauptzufuhrleitung (19) in eine Ringleitung (20) mündet, und die Ringleitung (20) über jeweils eine Stichleitung (23) mit dem Kopf (24) jeder Brennstofflanze (3) verbunden ist.

## Beschreibung

### Technisches Gebiet

Die Erfindung bezieht sich auf das Gebiet der Verbrennungstechnik. Sie betrifft eine Vorrichtung zum Betreiben einer Ringbrennkammer für Gasturbinen, welche mit kombinierten Brennern für flüssige und gasförmige Brennstoffe, insbesondere Brennern der Doppelkegelbauart bestückt ist, wobei jeder Brenner eine Airblast-Düse zum Zerstäuben des flüssigen Brennstoffes aufweist, in welche Zerstäubungsluft von ausserhalb der Brennerhaube zugeführt wird und wobei der Zustrom der Zerstäubungsluft bei Gasbetrieb zumindestens teilweise abgedrosselt wird.

### Stand der Technik

Zur Erzielung möglichst niedriger NOx-Emissionen werden Brenner nahe ihrer mageren Löschgrenze betrieben. Dadurch wird allerdings der Regelbereich der Brenner stark eingeschränkt. Um diesen Nachteil zu beseitigen, wird beispielsweise bei Teillastbetrieb einer Gasturbine eine interne Pilotierung angewendet, bei der die Brenngase in Achsnähe mit zusätzlichem Brennstoff angefettet werden. Dadurch wird der Stabilitätsbereich der Brenner so weit erweitert, dass ein sicherer Betrieb auch bei Teillastbedingungen gewährleistet ist.

Zum wahlweisen Betrieb eines Brenners mit gasförmigem oder flüssigem Brennstoff ist es bekannt, den flüssigen Brennstoff mit Hilfe einer Airblast-Düse zu zerstäuben. Dazu wird in Achsnähe, d.h. im Zentrum des Brenners Luft eingedüst. Diese Zerstäubungsluft wird ebenso wie die Verbrennungsluft bei Vormischbrennern der Doppelkegelbauart, deren prinzipieller Aufbau in EP 0 321 809 B1 beschrieben ist, einem ausserhalb des Brenners angeordnetem Plenum entnommen.

Die Eindüsung der Zerstäubungsluft geschieht aber nicht nur bei der Brennölzerstäubung, sondern auch im Gasbetrieb, bei dem jedoch gar keine Luft zur Zerstäubung notwendig ist. Im Gasbetrieb des Brenners destabilisiert diese zusätzliche Luft die Flamme zum einen durch Abmagerung und zum anderen durch die Anströmung selbst. Das führt wiederum zu einer deutlichen Herabsetzung der mageren Löschgrenze der Gasflamme.

Aus DE 44 24 599 A1 sind ein Verfahren und mehrere Vorrichtungen zum Betreiben eines kombinierten Brenners für flüssige und gasförmige Brennstoffe bekannt, bei denen dieser Nachteil beseitigt wird, indem eine Steuerung des Zustromes der Zerstäubungsluft vorgesehen ist, wobei beim Betrieb mit gasförmigen Brennstoff der Zustrom der Zerstäubungsluft zumindest teilweise abgedrosselt wird.

Dazu ist gemäss DE 44 24 599 A1 beispielsweise die Airblast-Düse so ausgebildet, dass der Pilotgaskanal vor dem Zerstäubungsquerschnitt in mindestens einen Zerstäubungsluftkanal mündet, so dass das Abdrosseln der Zerstäubungsluft mittels des Pilotgases erfolgt. Diese Ausführung hat den Nachteil, dass beim Betrieb des Brenners mit gasförmigem Brennstoff nicht nur während der Startphase, sondern ständig mit zusätzlichem Pilotgas gearbeitet werden muss.

In einer anderen in DE 44 24 599 A1 beschriebenen Ausführung, bei welcher der Brenner in der Brennerhaube durch einen Brennerstutzen mit integrierter Lufteintrittsöffnung für die Gebläseluft befestigt ist und zur Zufuhr des flüssigen Brennstoffes am Brennerstutzen stromaufwärts eine Brennstofflanze anschliesst, ist auf der Brennstofflanze oder dem Brennstutzen ein Verstellmechanismus, z.B. in Form einer verschiebbaren oder drehbaren Hülse, angeordnet, der beim Betreiben des Brenners mit gasförmigen Brennstoff die Lufteintrittsöffnung der Zerstäubungsluft zumindestens teilweise verschliesst. Diese Lösung hat den Nachteil, dass der Verstellmechanismus im Inneren der Maschine angeordnet ist und daher schwer zugänglich ist.

Aus GB 2 091 409 A ist eine Airblast-Düse bekannt, bei der der Zustrom der Verbrennungs- und der Zerstäubungsluft entsprechend dem Bedarf der Brennkammer gemeinsam gesteuert wird. Dazu sind zwei unterschiedliche Dosierventile angeordnet, die von einem gemeinsamen Kolben beaufschlagt werden. Diese Lösung hat den Nachteil, dass keine separate Steuerung der Zerstäubungsluft möglich ist. Ausserdem sind die Ventile unmittelbar an der Düse angeordnet und somit hohen Temperaturen ausgesetzt.

### Darstellung der Erfindung

Die Erfindung versucht, alle diese Nachteile zu vermeiden. Ihr liegt die Aufgabe zugrunde, eine einfache Vorrichtung zum Betreiben einer mit kombinierten Brennern für flüssige und gasförmige Brennstoffe zwecks Heissgaserzeugung bestückten Ringbrennkammer zu schaffen, mit der eine separate Steuerung der Zerstäubungsluft ermöglicht wird, so dass die magere Löschgrenze der Gasflammme ohne Beeinträchtigung der Zerstäubung des flüssigen Brennstoffes heraufgesetzt wird. Die Vorrichtung soll zuverlässig arbeiten und ein problemloses Umschalten zwischen Gas- und Ölbetrieb der Brenner ermöglichen.

Erfindungsgemäss wird dies bei einer Vorrichtung zum Betreiben einer mit kombinierten Brennern für flüssige und gasförmige Brennstoffe, insbesondere Brennern der Doppelkegelbauart, bestückten Ringbrennkammer, wobei jeder Brenner zur Zufuhr des flüssigen Brennstoffes eine Brennstofflanze mit zusätzlichen Luftkanälen und zum Zerstäuben des flüssigen Brennstoffes eine Airblast-Düse aufweist, in welche Zerstäubungsluft von ausserhalb der Brennerhaube zugeführt wird, und ein Verstellmechanismus zur zumindestens teilweisen Abdrosselung des Zustromes der Zerstäubungsluft bei Gasbetrieb vorgesehen ist, dadurch erreicht, dass der Verstellmechanismus ein externes Ventil ist, welches in einer vom Verdichteraustritt kommenden Hauptzufuhrleitung für die Zerstäubungsluft angeordnet ist, wobei die Hauptzufuhrleitung in eine Ringleitung mündet, und die Ringleitung über jeweils eine Stichleitung mit dem Kopf jeder Brennstofflanze verbunden ist.

Die Vorteile der Erfindung bestehen darin, dass der Zustrom der Zerstäubungsluft auf einfache Art und Weise ausserhalb der Düse bzw. des Brenners gesteuert und somit optimal auf die jeweiligen Betriebsbedingungen angepasst werden kann. Es kann wahlweise zwischen Gas- und Ölbetrieb des Brenners umgeschaltet werden, wobei bei Ölbetrieb das Ventil so weit geöffnet wird, dass die benötigte Zerstäubungsluft ungehindert in die Airblast-Düse gelangt, während bei Gasbetrieb des Brenners das Ventil entweder ganz geschlossen und damit der Zustrom der Zerstäubungsluft verhindert wird oder das Ventil wird teilweise geschlossen, so dass nur ein bestimmter, die Flammenstabilität kaum beeinflussender Anteil Luft in die Brennstofflanze gelangt. Durch die externe Anordnung des Steuersystems ist auch sein zuverlässiges Arbeiten bei hohen Betriebstemperaturen im Inneren der Maschine gewährleistet.

Es ist besonders zweckmässig, wenn die Ringleitung ausserhalb am Gehäuse der Gasturbine angeordnet ist. Das ermöglicht ein einfache Montage und eine problemlose Zugänglichkeit.

### Kurze Beschreibung der Zeichnung

In der Zeichnung ist ein Ausführungsbeispiel der Erfindung anhand einer mit kombinierten Brennern für flüssige und gasförmige Brenner bestückten Ringbrennkammer, welche das zur Beaufschlagung einer Gasturbine benötigte Heissgas bereitstellt, dargestellt.

Es zeigen:
- Fig. 1: eine schematische Darstellung der Anordnung eines mit einer Airblast-Düse ausgestatteten Brenners;
- Fig. 2: eine Prinzipskizze der erfindungsgemässen Vorrichtung;
- Fig. 3: ein vergrössertes Detail aus Fig 2.

Es sind nur die für das Verständnis der Erfindung wesentlichen Elemente gezeigt. Die Strömungsrichtung der Arbeitsmittel ist mit Pfeilen bezeichnet.

### Weg zur Ausführung der Erfindung

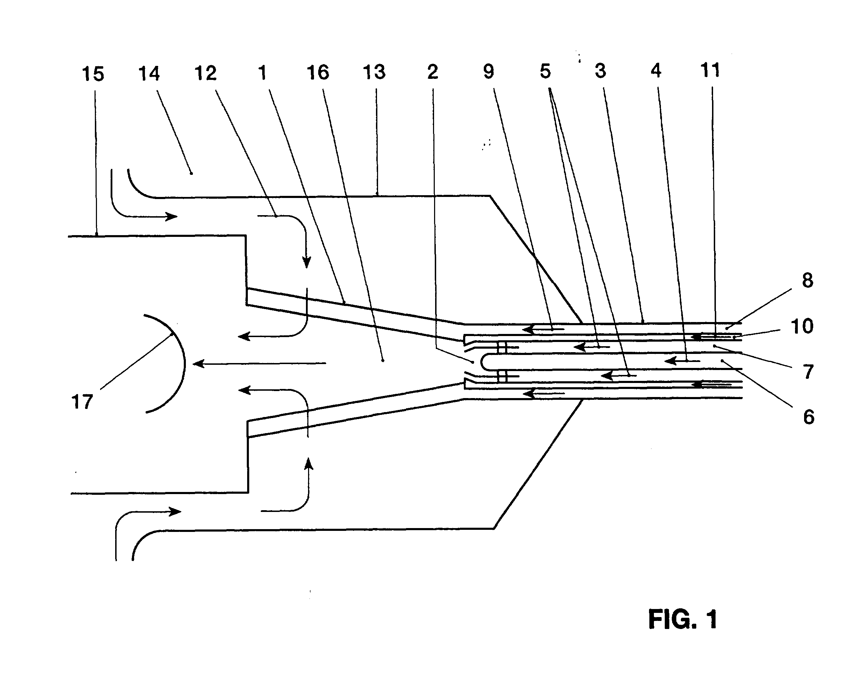

Nachfolgend wird die Erfindung anhand eines Ausführungsbeispieles und der Fig. 1 bis 3 näher erläutert.

Fig. 1 zeigt schematisch einen Brenner 1 der Doppelkegelbauart. Dessen prinzipieller Aufbau ist ausführlich in EP 0 321 809 B1 beschrieben, so dass hier deshalb darauf verzichtet wird. Im stromaufwärtigen Ende des Brenners 1 ist eine Airblast-Düse 2 angeordnet. Die Airblast-Düse 2 wird über eine mit dem Doppelkegelbrenner 1 verbundene Brennstofflanze 3 mit flüssigem Brennstoff 4 und mit Zerstäubungsluft 5 versorgt. Aus diesem Grunde sind in der Brennstofflanze 3 ein Flüssigbrennstoffkanal 6 und ein Zerstäubungsluftkanal 7 angeordnet. Ausserdem liefert die Brennstofflanze 3 über einen Gaskanal 8 den gasförmigen Brennstoff 9 für den Brenner 1. Schliesslich kann über einen in der Brennstofflanze 3 angeordneten Pilotgaskanal 10 zusätzlich gasförmiger Brennstoff, sogenanntes Pilotgas 9, zum Anfetten der Brenngase in Achsnähe des Doppelkegelbrenners eingedüst werden. Die Verbrennungsluft 12 wird dem Brenner 1 aus dem Raum innerhalb der Brennerhaube 13, welche mit einem Luftplenum 14 in Verbindung steht, zugeführt. Stromabwärts mündet der Brenner 1 in die Brennkammer 15.

Beim Betrieb mit flüssigem Brennstoff 4 wird dieser über den in der Brennstofflanze 3 zentral angeordneten Flüssigbrennstoffkanal 6 in die Airblast-Düse 2 geführt und dort mittels der über den Zerstäubungsluftkanal 7 zugeführten Zerstäubungsluft 5 fein zerstäubt. Anschliessend gelangt der so zerstäubte Brennstoff 4 zwecks Vormischung mit der über die tangentialen Lufteintrittsschlitze des Doppelkegelbrenners 1 einströmenden Verbrennungsluft 12 in den Brennerinnenraum 16. Das Gemisch verbrennt schliesslich in der Brennkammer 15.

Beim Betrieb mit gasförmigen Brennstoff 9 wird der Zustrom der Zerstäubungsluft 5, wie weiter unten beschrieben wird, abgedrosselt bzw. ganz unterbunden. Der gasförmige Brennstoff 9 wird daher ungestört mit der über die tangentialen Lufteintrittsschlitze in den Brennerinnenraum 16 einströmenden Verbrennungsluft 12 vorgemischt. Stromabwärts der Brennermündung bildet sich eine Rückströmzone 17 aus, an deren Spitze die Zündung des Brennstoff/Luft-Gemisches erfolgt. An dieser Stelle bildet sich dann eine stabile Flammenfront aus. Um auch beim Start bzw. bei Teillastbedingungen ein stabiles Brennen der Flamme zu gewährleisten, wird durch den Pilotgaskanal 10 der Düse 2 Pilotgas 11 zugeführt. Durch diesen zusätzlichen Brennstoff 11 werden die Brenngase angefettet und der Stabilitätsbereich des Brenners 1 wird erweitert.

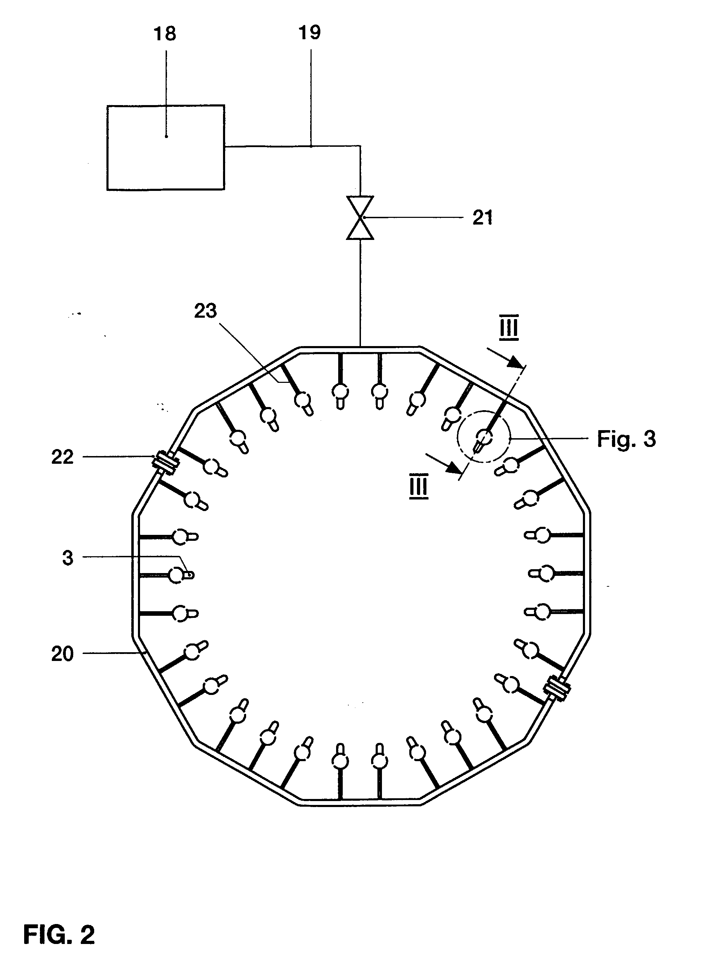

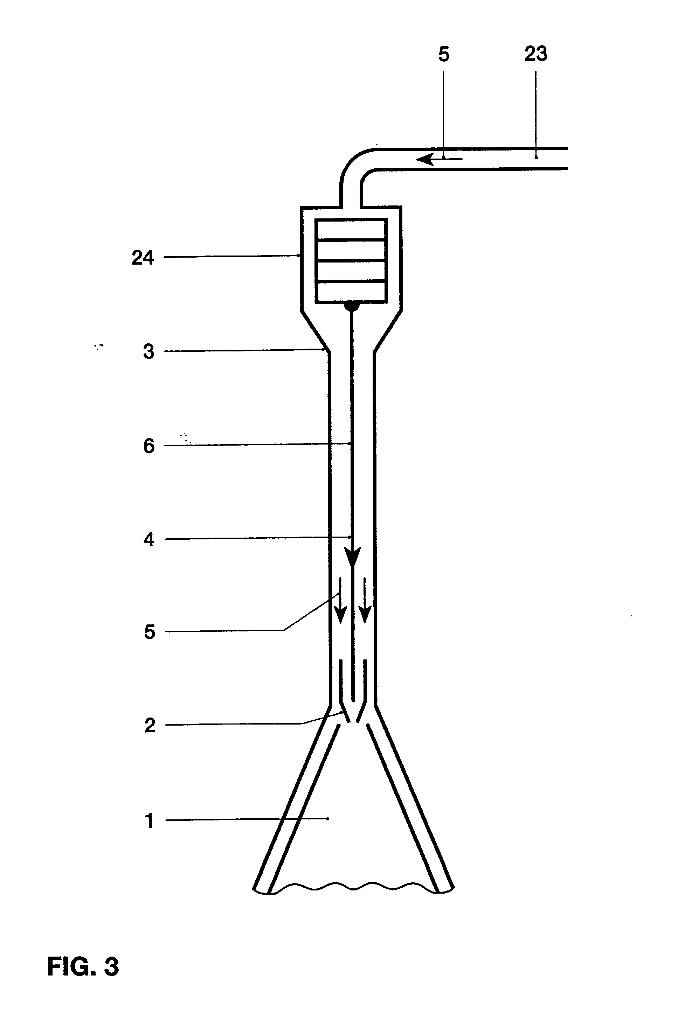

Fig. 2 zeigt eine Prinzipskizze der erfindungsgemässen Vorrichtung. Die Ringbrennkammer 15 ist zwischen einem hier nicht dargestellten Verdichter und einer ebenfalls nicht dargestellten Turbine angeordnet. Am in Fig. 2 schematisch dargestellten Verdichteraustritt 18 der Gasturbinenanlage ist eine Leitung 19 angeschlossen, die zu einer Ringleitung 20 führt und mit dieser verbunden ist. Die Leitung 19 stellt die Hauptzufuhrleitung für die Zerstäubungsluft 5 dar. In der Leitung 19 ist ein Ventil 21 angeordnet, mit welchem sich die Menge der in die Ringleitung 20 strömenden Zerstäubungsluft 5 regulieren lässt. Die Ringleitung 20 ist aussen am Gehäuse der Gasturbine montiert, sie führt um die ganze Maschine herum. Aus Montagegründen ist die Ringleitung 20 geteilt, ihre beiden Hälften sind mit Hilfe von Flanschen 22 miteinander verbunden. Von der Ringleitung 20 zweigen gemäss dem in Fig. 2 dargestellten Ausführungsbeispiel 20 Stichleitungen 23 ab. Jeweils eine dieser Stichleitungen 23 ist an ihrem anderen Ende mit dem Kopf 24 einer Brennstofflanze 3 verbunden. Dies ist besonders deutlich in dem vergrösserten Detail gemäss Fig. 3 zu erkennen.

Werden die Brenner 1 der Ringbrennkammer 15 mit flüssigem Brennstoff 4 betrieben, so wird das Ventil 21 geöffnet. Die zur Zerstäubung des flüssigen Brennstoffes 4 in der Airblast-Düse benötigte Zerstäubungsluft 5 kann deshalb ungehindert in die Ringleitung 20 und von dort aus über die Stichleitungen 23 in die Lanzenköpfe 24 gelangen. Anschliessend strömt die Luft 5 durch den in der Brennstofflanze 3 vorhandenen Zerstäubungsluftkanal 7 in die Airblast-Düse 2, wo sie zur Zerstäubung des flüssigen Brennstoffes 4 benutzt wird. Der zerstäubte flüssige Brennstoff 4 wird danach mit der Haupt-Verbrennungsluft 12 vorgemischt und das Gemisch schliesslich in der Brennkammer 15 verbrannt, wobei nur geringe NOx-Emissionen auftreten.

Wird nun auf Gasbetrieb umgestellt, dann wird das Ventil 21 zumindestens teilweise geschlossen, so dass nur ein bestimmter Anteil an Luft 5 durch die Leitungen 19, 20 und 23 in die Brennstofflanze 3 gelangt. Selbstverständlich ist es auch möglich, durch vollständiges Schliessen des Ventiles 21 den Zustrom der Zerstäubungsluft 5 völlig zu unterbinden. Auf diese Weise ist es möglich, die zuzuführende Luftmenge sehr einfach zu steuern und eine schnelle Anpassung auf die jeweiligen Betriebsbedingungen zu erreichen. Die Gasflamme wird nicht destablisiert. Es kann problemlos zwischen Gas- und Ölbetrieb umgeschaltet werden. Beim Umschaltvorgang ist kein Austauschen der Brennstofflanzen nötig. Die Steuerung der Luftzufuhr über ein externes Ventil hat ausserdem den Vorteil einer guten Zugänglichkeit und einer guten Betriebssicherheit, weil der Verstellmechanismus ausserhalb der Maschine betätigt werden kann. Das ist besonders wichtig, weil im Zuge der ständigen Wirkungsgradverbesserungen heutzutage Gasturbinen bei immer höheren Temperaturen betrieben werden.

### Bezugszeichenliste

- 1: Brenner
- 2: Airblast-Düse
- 3: Brennstofflanze
- 4: flüssiger Brennstoff
- 5: Zerstäubungsluft
- 6: Flüssigbrennstoffkanal
- 7: Zerstäubunasluftkanal
- 8: Gaskanal
- 9: gasförmiger Brennstoff
- 10: Pilotgaskanal
- 11: Pilotgas
- 12: Verbrennungsluft
- 13: Brennerhaube
- 14: Plenum
- 15: Brennkammer
- 16: Brennerinnenraum
- 17: Rückströmzone
- 18: Verdichteraustritt
- 19: Hauptzufuhrleitung für Pos. 5
- 20: Ringleitung
- 21: Ventil
- 22: Flansch
- 23: Stichleitung
- 24: Kopf von Pos. 3

## Patentansprüche

1. Vorrichtung zum Betreiben einer mit kombinierten Brennern (1) für flüssige (4) und gasförmige Brennstoffe (9), insbesondere Brennern der Doppelkegelbauart, bestückten Ringbrennkammer (15) für Gasturbinen, wobei jeder Brenner (1) zur Zufuhr des flüssigen Brennstoffes (4) eine Brennstofflanze (3) mit mindestens einem zusätzlichen Luftkanal (7) und zum Zerstäuben des flüssigen Brennstoffes (4) eine Airblast-Düse (2) aufweist, in welche Zerstäubungsluft (5) von ausserhalb der Brennerhaube (13) zugeführt wird, und ein Verstellmechanismus zur zumindestens teilweisen Abdrosselung des Zustromes der Zerstäubungsluft (5) bei Gasbetrieb vorgesehen ist, dadurch gekennzeichnet, dass der Verstellmechanismus ein externes Ventil (21) ist, welches in einer vom Verdichteraustritt (18) kommenden Hauptzufuhrleitung (19) für die Zerstäubungsluft (5) angeordnet ist, wobei die Hauptzufuhrleitung (19) in eine Ringleitung (20) mündet, und die Ringleitung (20) über jeweils eine Stichleitung (23) mit dem Kopf (24) jeder Brennstofflanze (3) verbunden ist.

2. Vorrichtung nach Anspruch 1, dadurch gekennzeichnet, dass die Ringleitung (20) ausserhalb am Gehäuse der Gasturbine angeordnet ist.
